# EUROPÄISCHE PATENTSCHRIFT

(11) **EP 0 966 083 B1**
(45) Veröffentlichungstag und Bekanntmachung des Hinweises auf die Patenterteilung: **09.10.2002**
(21) Anmeldenummer: 99111275.6
(22) Anmeldetag: 10.06.1999
(51) Int. Cl.: H02G 11/02, B65H 75/44

(54) **Selbstaufwickelnder Kabelaufroller**
Automatic cable winding device
Enrouleur de câble automatique

(30) Priorität: 16.06.1998 DE 19826661
(43) Veröffentlichungstag der Anmeldung: 22.12.1999
(73) Patentinhaber: ATLANTA-KABEL-Steinmüller GmbH & Co. KG, D-58515 Lüdenscheid (DE)
(72) Erfinder: Steinmüller, Jörg, 58540 Meinerzhagen (DE); Kleindopp, Günther, 58849 Herscheid (DE); Büttner, Gerhard, 98529 Suhl (DE)
(74) Vertreter: Hassler, Werner, Dr.

(56) Entgegenhaltungen:
- DE-A- 2 710 129
- DE-A- 3 039 202
- DE-A- 3 813 824
- DE-C- 4 025 409
- DE-U- 8 532 395

## Beschreibung

Die Erfindung betrifft einen selbstaufwickelnden Kabelaufroller mit einer Grundplatte, die auf einem Lagerzapfen die Kabeltrommel aufnimmt und eine äußere erste Umfangswand sowie eine in einer Radialebene ausgerichtete erste Ringwand aufweist.

Ein derartiger Kabelaufroller ist aus der DE 40 25 409 C1 bekannt. Dort ist die Kabeltrommel mehrteilig ausgebildet und die Anordnung der Funktionsteile wie Aufrollfeder, Bremse und Schleifringe ist aufwendig.

Die DE-U-85 32 395, welche als nächstliegender Stand der Technik angesehen wird, beschreibt eine Kabelaufwickelvorrichtung, die eine Grundplatte mit einer Umfangswand und einer Ringwand aufweist. Die konzentrisch zu einer Trommelwand angeordnete Aufrollfeder benötigt viel Platz und läßt die Anordnung einer Bremse nicht unmittelbar zu.

Aufgabe der Erfindung ist ein stabiler und konzentrierter Aufbau aller Funktionsteile auf einer Grundplatte und eine Kontaktanordnung aus wenig Einzelteilen.

Diese Aufgabe wird nach der Erfindung dadurch gelöst, daß in eine durch eine zweite Umfangswand, eine zweite Ringwand und eine dritte Umfangswand gebildete U-förmige Rinne der Grundplatte ein Umfangsstutzen der Kabeltrommel hineinragt, daß eine Kammer der Grundplatte an ein Fenster der zweiten Umfangswand anschließt und eine Aufrollfeder aufnimmt, die an dem Umfangsstutzen befestigt ist, daß die dritte Umfangswand mindestens ein weiteres Fenster aufweist, durch das eine Bremsolle hindurchreicht und an der Innenfläche des Umfangsstutzens anliegt, daß eine zentrale Ringwand der Grundplatte Kontaktringe aufnimmt und einen Lagerzapfen trägt und daß eine Ringwand der Kabeltrommel Schleifkontakte trägt.

Die Erfindung unterscheidet sich insofern vom Stand der Technik, als alle Funktionsteile von der Grundplatte aufgenommen sind, wobei die Bremskräfte der Bremsrolle und die Zugkräfte der Aufrollfeder innerhalb der Grundplatte auf einen Umfangsstutzen der Kabeltrommel übertragen werden, so daß im Betrieb des Kabelaufrollers nur geringe Kraftmomente auftreten. Die Anordnung der Kontaktringe mit angeformten Steckerstiften bzw. Flachsteckern auf der Grundplatte hat den Vorteil, daß die Kontaktringe leicht ausgetauscht werden können, wenn eine andere Anschlußart gewünscht ist, z.B. Flachstecker in anderer Dicke oder aus anderem Werkstoff.

Eine sichere Aufnahme und Halterung der Aufrollfeder wird dadurch erzielt, daß die Aufrollfeder an einem zentralen Zapfen der Kammer befestigt ist.

Eine gleichmäßige Belastung der Schleifringe wird daurch erzielt, daß die beiden Schleifkontakte gleich ausgebildet sind und daß die Kontaktköpfe der Schleifkontakte einander etwa diametral gegenüberliegen.

Eine stabile Ausbildung der Bremse und eine leichte Zugänglichkeit erreicht man dadurch, daß auf der dem Lagerzapfen gegenüberliegenden Seite der Grundplatte eine radiale Führung für einen Bremshebel vorgesehen ist und daß der Bremshebel symmetrisch zu der Führung ausgerichtete Schlitze zur Führung eines Zapfens einer Bremsrolle aufweist. Die Bremse ist von der freien Seite der Grundplatte montierbar und jederzeit austauschbar. Damit läßt sich eine defekte Bremse schnell austauschen.

Ein leichter Einbau und Ausbau der Bremse erleichtert deren Austausch dadurch, daß der Bremshebel in axialer Richtung in die Führung und die Grundplatte eindrückbar und durch Führungsstege und Rastnasen verrastbar ist.

Die Vorspannung des Bremshebels in Bremsstellung wird dadurch sichergestellt, daß eine in radialer Richtung wirksame Druckfeder zwischen dem Bremshebel und einem radial ausgerichteten Zapfen der Grundplatte abgestützt ist.

Eine Festhaltung und Wegbegrenzung für die Fliehkraftgewichte wird dadurch erreicht, daß in radialen Führungen eines Flansches der Kabeltrommel geführte Fliehkraftgewichte mit Schlitzen Rastelemente der Führungen übergreifen.

Eine einfache und sichere Zugentlastung wird dadurch erreicht, daß innerhalb des Kerns der Kabeltrommel klemmende Zugentlastungselemente vorgesehen sind.

Ein Ausführungsbeispiel wird anhand der Zeichnungen erläutert, in denen darstellen:

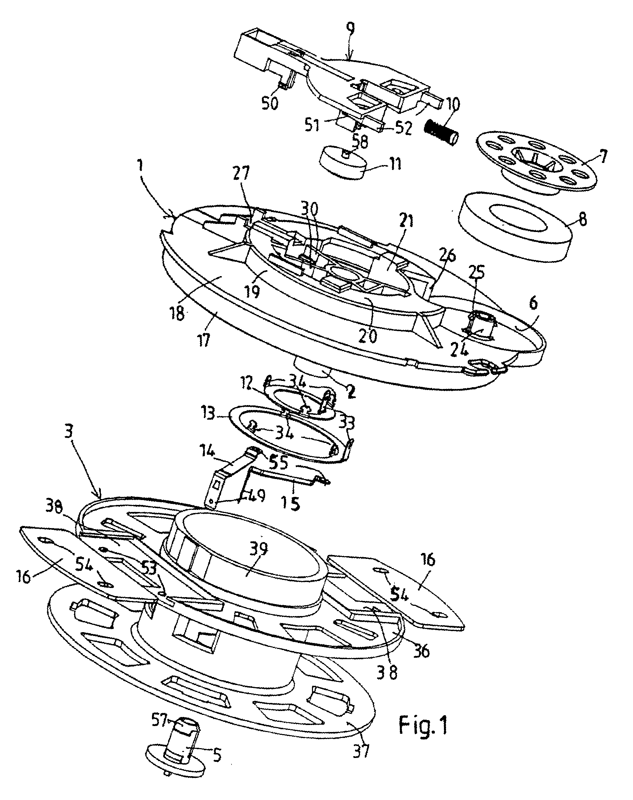

Fig. 1 eine Explosionszeichnung des Kabelaufrollers von der Seite der Grundplatte gesehen,
Fig. 2 eine Explosionszeichnung von der Seite der Kabeltrommel gesehen,

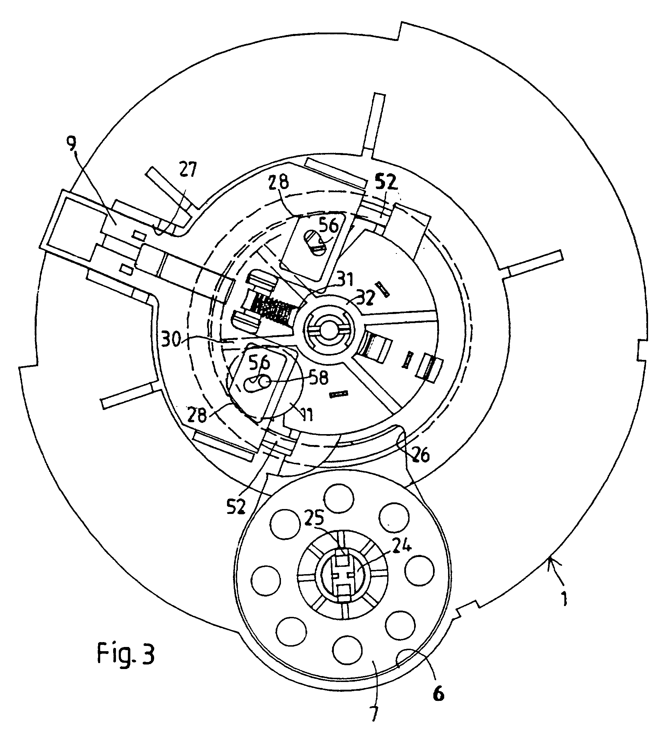

Fig. 3 eine Ansicht der Grundplatte des Kabelaufrollers,

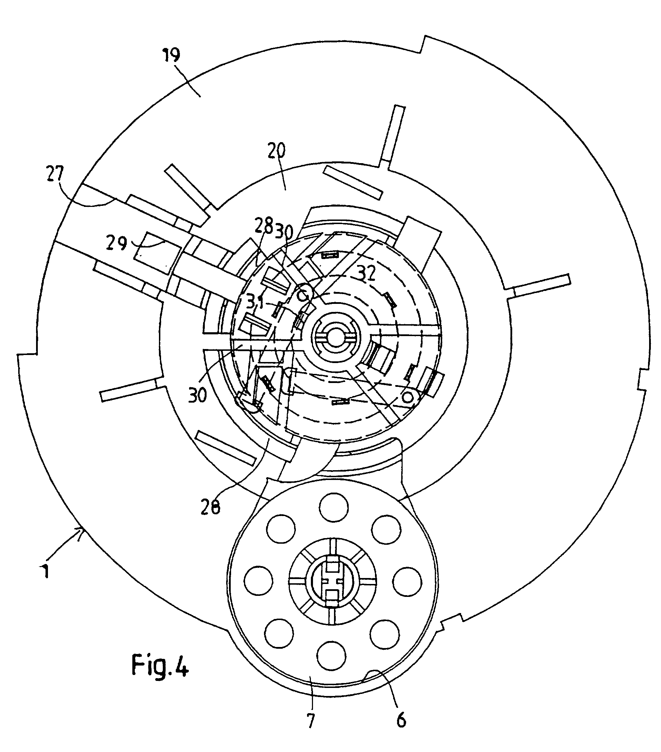

Fig. 4 eine entsprechende Ansicht mit abgenommenem Bremshebel,
Fig. 5 eine axiale Ansicht der Kabeltrommel und

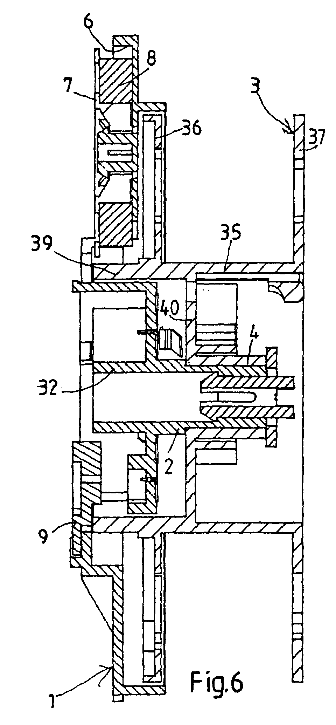

Fig. 6 einen Axialschnitt durch den Kabelaufroller.

Der Kabelaufroller umfaßt folgende Hauptteile: eine Grundplatte 1 mit einem hohlen Lagerzapfen 2, eine Kabeltrommel 3 mit einer auf dem Lagerzapfen 2 sitzenden Nabe 4, einen buchsenförmigen Verschluß 5 mit Rasthaken 57 zur Halterung der Kabeltrommel 3 bzw. deren Nabe 4 auf dem Lagerzapfen 2, eine in einer Kammer 6 der Grundplatte 1 aufgenomme Rolle 7 mit einer Aufrollfeder 8, einen in einer radialen Führung 27 der Grundplatte 2 aufgenommenen Bremshebel 9 mit einer Druckfeder 10 und einer Bremsrolle 11, sowie elektrische Funktionsteile wie zwei Kontaktringe 12, 13 und zwei federnde Schleifkontakte 14, 15. Die Kammer 6 und die Führung 27 sind auf der dem Lagerzapfen 2 gegenüberliegenden Seite der Grundplatte 1 offen. In einem Flansch 36 der Kabeltrommel 3 sind Fliehkraftgewichte 16 geführt und gehalten.

Diese Hauptteile des Kabelaufrollers werden im Folgenden in Einzelheiten erläutert.

Die Grundplatte 1 ist das tragende Bauteil des Kabelaufrollers und wird in ein nicht dargestelltes Gehäuse eingebaut und darin verrastet oder in anderer Weise gehalten. Die Grundplatte 1 umfaßt eine äußere mantelförmige erste Umfangswand 17, eine in einer Radialebene ausgerichtete erste Ringwamd 18, eine weitere mantelförmige zweite Umfangswand 19, wobei die beiden Umfangswände 17, 19 jeweils in entgegengesetzten Richtungen an die erste Ringwand 18 anschließen, eine zweite in einer Radialebene ausgerichtete Ringwand 20, eine innere mantelförmige dritte Umfangswand 21, die mit der zweiten Ringwand 20 und der zweiten Umfangswand 19 eine U-förmige Rinne bildet, eine dritte radiale Ringwand 22 und den zentralen Lagerzapfen 2 für die Nabe 4 der Kabeltrommel 3.

Auf der dem Lagerzapfen 2 gegenüberliegenden Seite der Grundplatte 1 befindet sich im Bereich der ersten Ringwand 18 die kreisförmige Kammer 6, in deren Zentrum ein hohler Zapfen 24 mit stimseitigen Rastnasen 25 ausgebildet ist. Die Wandung der Kammer 6 berührt die zweite Umfangswandung 19. Im Berührungsbereich ist in der zweiten Umfangswand 19 und der Wandung der Kammer 6 ein Fenster 26 ausgebildet.

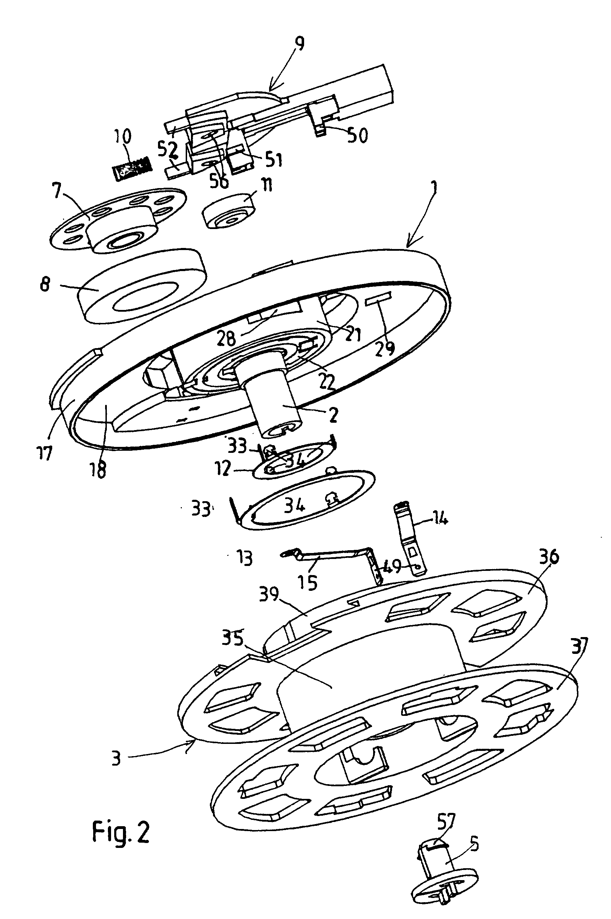

Ebenfalls auf der genannten Seite der Grundplatte 1 befindet sich im Bereich der ersten und zweiten Ringwand 18 und 20 eine radial ausgerichtete, profilierte Führung 27 für den Bremshebel 9, der mit Führungsstegen 50, Rastnasen 51 und Zapfen 52 in Schlitze 29 oder Hinterschneidungen und Ausnehmungen der Führung 27 eingreift. Von den Führungsstegen 50 und Rastnasen 51 ist jeweils nur eine auf einer Seite des Bremshebels 9 sichtbar. Zu beiden Seiten der Führung 27 sind in der inneren dritten Umfangswand 21 Fenster 28 für die Bremsrolle 11 ausgebildet, von denen ein Fenster 28 für die eine Aufwickelrichtung des Kabels in Fig. 2 sichtbar ist. Das andere dieser Fenster 28 befindet sich in Umfangsrichtung symmetrisch zu dem Schlitz 29 der Führung 27. Jeweils an das der Führung 27 zugewandte Ende jedes Fensters 28 schließt eine etwa radial ausgerichtete Wand 30 an. An einer Verlängerung 32 der Lagerbuchse 2 ist ein auf die Führung 27 ausgerichteter, radialer Zapfen 31 zur Aufnahme der Druckfeder 10 angeformt. Der Bremshebel 9 ist in axialer Richtung in die Führung 27 eingesetzt und darin durch die Führungsstege 50 und Rastnase 51 verrastet und durch die Druckfeder 10 in Bremsstellung vorgespannt und gesichert. Der Bremshebel ist in axialer Richtung ausbaubar. Er kann also jederzeit nach einer Beschädigung ausgetauscht werden.

In die dritte Ringwand 22 sind die beiden Kontaktringe 12 und 13 eingelassen, die jeweils einen Steckerstift bzw. Flachstecker 33 und Haltelaschen 34 tragen, die durch Durchgänge der dritten Ringwand 22 gesteckt sind und die Kontaktringe 12 und 13 festhalten sowie deren elektrischen Anschluß ermöglichen. Man kann Kontaktringe 12, 13 aus unterschiedlichem Werkstoff und mit unterschiedlichen Abmessungen, insbesondere Dickenabmessungen, in eine gleiche Grundplatte 1 einbauen. Auf die Steckerstifte bzw. Flachstecker 33 kann man eine Steckhülse einer nicht dargestellten Anschlußleitung unmittelbar aufstecken.

An einem Spulenkern 35 der Kabeltrommel 3 sitzen zwei Flansche 36, 37. In dem Flansch 36 sind zwei taschenförmige Führungen 38 für Fliehkraftgewichte 16 ausgebildet. Rastelemente 53 jeder Führung 38 greifen in Schlitze 54 jedes Fliehkraftgewichts 16 ein, so daß sich die Fliehkraftgewichte 16 nur über den durch die Schlitze 54 vorgegebenen Bremsweg bewegen können.

An den Spulenkern 35 schließt ein Umfangsstutzen 39 an, in den einerseits die Aufrollfeder 8 eingehängt ist, die sich beim Ausziehen des Kabels um den Umfangsstutzen 39 legt, und deren Innenfläche andererseits als Bremsfläche für die Bremsrolle 11 dient.

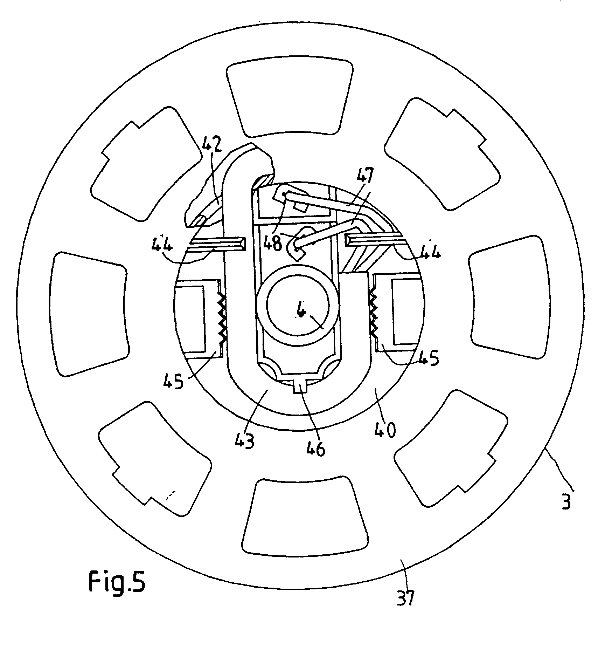

Innerhalb des Spulenkern 35 trägt eine radial ausgerichtete Ringwand 40 die Nabe 4, die auf den Lagerzapfen 2 paßt. Auf der Ringwand 40 ist auch die Zugentlastungsvorrichtung angebracht, wie man aus der Ansicht der Fig. 5 ersieht. Im Spulenkern 35 sind zwei Durchgänge 42 für entgegengesetzte Aufrollrichtungen eines Anschlußkabels 43 vorgesehen. Das Anschlußkabel 43 wird durch Haltestege 44, Klemmbacken 45 und Nasen 46 geklemmt und in Position gehalten. Die Leiterenden 47 weisen Steckhülsen 48 auf, die auf die Steckerstifte oder Flachstecker 49 der Schleifkontakte 14, 15 aufgesteckt sind. Die Schleifkontakte 14, 15 sind in der Ringwand 40 gehalten und liegen mit Kontaktköpfen 55 unter Vorspannung an den Kontaktringen 12, 13 an. Die Schleifkontakte 14, 15 sind gleich ausgebildet. Die Kontaktköpfe 55 liegen einander etwa diametral gegenüber, so daß sich ein gleichmäßiger Kontaktdruck auf die Kontaktringe 12, 13 ergibt. Nach Zusammenbau dieser Teile wird der Verschluß 5 in den hohlen Lagerzapfen 2 eingedrückt und verrastet durch die Rasthaken 57.

Der Bremshebel 9 greift mit den Führungsstegen 50, den Führungsnasen 51 und den Führungszapfen 52 in Schlitze 29 und andere Führungen der Grundplatte 1 ein. Dadurch ist der Bremshebel 9 in radialer Richtung geführt. Die Druckfeder 10 stützt sich auf dem Zapfen 31 der Grundplatte 1 und an dem Bremshebel 9 ab und spannt den Bremshebel 9 in Bremsstellung vor. Jeweils in einem Schlitz 56 des Bremshebels 9 ist ein Zapfen 58 der Bremsrolle 11 geführt. Die Schlitze 56 sind gegeneinander und gegen die Wände 30 geneigt. In der Bremsstellung ist zwar ein Ausziehen des Anschlußkabels möglich, jedoch ist die Kabeltrommel 3 durch die Bremsrolle 11 abgebremst und somit die Aufrollfeder 8 unwirksam. Die Bremsrolle wird durch Betätigung des Bremshebels 9 entgegen der Federspannung gelöst, so daß die Aufrollfeder 8 wirksam werden kann.

## Patentansprüche

1. Selbstaufwickelnder Kabelaufroller mit einer Grundplatte (1), die auf einem Lagerzapfen (2) eine Kabeltrommel (3) aufnimmt und eine äußere erste Umfangswand (17) sowie eine in einer Radialebene ausgerichtete erste Ringwand (18) aufweist, **dadurch gekennzeichnet, daß** in eine durch eine zweite Umfangswand (19), eine zweite Ringwand (20) und eine dritte Umfangswand (21) gebildete U-förmige Rinne der Grundplatte (1) ein Umfangsstutzen (39) der Kabeltrommel (3) hineinragt, daß eine Kammer (6) der Grundplatte (1) an ein Fenster (26) der zweiten Umfangswand (19) anschließt und eine Aufrollfeder (8) aufnimmt, die an dem Umfangsstutzen (39) befestigt ist, daß die dritte Umfangswand (21) mindestens ein weiteres Fenster (28) aufweist, durch das eine Bremsrolle (11) hindurchreicht und an der Innenfläche des Umfangsstutzens (39) anliegt, daß eine zentrale Ringwand (22) der Grundplatte (1) Kontaktringe (12, 13) aufnimmt und einen Lagerzapfen (2) trägt und daß eine Ringwand (40) der Kabeltrommel (3) Schleifkontakte (14, 15) trägt.

2. Selbstaufwickelnder Kabelaufroller nach Anspruch 1, **dadurch gekennzeichnet, daß** die Aufrollfeder (8) an einem zentralen Zapfen (24) der Kammer (6) befestigt ist.

3. Selbstaufwickelnder Kabelaufroller nach Anspruch 1 oder 2, **dadurch gekennzeichnet, daß** die beiden Schleifkontakte (14, 15) gleich ausgebildet sind und daß die Kontaktköpfe (55) der Schleifkontakte einander etwa diametral gegenüberliegen.

4. Selbstaufwickelnder Kabelaufroller nach Anspruch 3, **dadurch gekennzeichnet, daß** die Kontaktringe (12, 13) austauschbar sind und Steckerstifte (33) bzw. Flachstecker aufweisen.

5. Selbstaufwickelnder Kabelaufroller nach einem der Ansprüche 1 bis 5, **dadurch gekennzeichnet, daß** auf der dem Lagerzapfen (2) gegenüberliegenden Seite der Grundplatte (1) eine radiale Führung (27) für einen Bremshebel (9) vorgesehen ist und daß der Bremshebel (9) symmetrisch zu der Führung (27) ausgerichtete Schlitze (56) zur Führung eines Zapfens (58) einer Bremsrolle (11) aufweist.

6. Selbstaufwickelnder Kabelaufroller nach Anspruch 5, **dadurch gekennzeichnet, daß** der Bremshebel (9) in axialer Richtung in die Führung (27) und die Grundplatte (1) eindrückbar und durch Führungsstege (50) und Rastnasen (51) verrastbar ist.

7. Selbstaufwickelnder Kabelaufroller nach Anspruch 5 oder 6, **dadurch gekennzeichnet, daß** eine in radialer Richtung wirksame Druckfeder (10) zwischen dem Bremshebel (9) und einem radial ausgerichteten Zapfen (31) der Grundplatte (1) abgestützt ist.

8. Selbstaufwickelnder Kabelaufroller nach einem der Ansprüche 1 bis 7, **dadurch gekennzeichnet, daß** in radialen Führungen (38) eines Flansches (36) der Kabeltrommel (3) geführte Fliehkraftgewichte (16) mit Schlitzen (54) Rastelemente (53) der Führungen (38) übergreifen.

9. Selbstaufwickelnder Kabelaufroller nach einem der Ansprüche 1 bis 8, **dadurch gekennzeichnet, daß** innerhalb des Kerns der Kabeltrommel klemmende Zugentlastungselemente vorgesehen sind.

## Claims

1. Self-winding cable reel with a baseplate (1) which receives a cable drum (3) on a bearing journal (2) and has an outer first circumferential wall (17) and a first annular wall (18) oriented in a radial plane, **characterized in that** a circumferential connection piece (39) of the cable drum (3) projects into a U-shaped groove of the baseplate (1), said groove being formed by a second circumferential wall (19), a second annular wall (20) and a third circumferential wall (21), **in that** a chamber (6) of the baseplate (1) is adjacent to a window (26) of the second circumferential wall (19) and receives a reeling spring (8) which is fastened to the circumferential connection piece (39), **in that** the third circumferential wall (21) has at least one further window (28), through which a brake roller (11) extends and comes to bear on the inner face of the circumferential piece (39), **in that** a central annular wall (22) of the baseplate (1) receives contact rings (12, 13) and carries a bearing journal (2), and **in that** an annular wall (40) of the cable drum (3) carries sliding contacts (14, 15).

2. Self-winding cable reel according to Claim 1, **characterized in that** the reeling spring (8) is : fastened to a central journal (24) of the chamber (6).

3. Self-winding cable reel according to Claim 1 or 2, **characterized in that** the two sliding contacts (14, 15) are.designed identically, and **in that** the contact heads (55) of the sliding contacts are located approximately diametrically opposite one another.

4. Self-winding cable reel according to Claim 3, **characterized in that** the contact rings (12, 13) are exchangeable and have plug pins (33) or flat plugs.

5. Self-winding cable reel according to Claims 1 to 5, **characterized in that** a radial guide (27) for a brake lever (9) is provided on that side of the baseplate (1) which is located opposite the bearing journal (2), and **in that** the brake lever (9) has slots (56) for guiding a journal (58) of a brake roller (11), said slots being oriented symmetrically to the guide (27).

6. Self-winding cable reel according to Claim 5, **characterized in that** the brake lever (9) is capable of being pressed into the guide (27) and the baseplate (1) in the axial direction and of being interlocked by means of guide webs (50) and locking noses (51).

7. Self-winding cable reel according to Claim 5 or 6, **characterized in that** a compression spring (10) active in the radial direction is supported between the brake lever (9) and a radially oriented tenon (31) of the baseplate (1).

8. Self-winding cable reel according to one of Claims 1 to 7, **characterized in that** centrifugal weights (16) which are guided in radial guides (38) of a flange (36) of the cable drum (3) engage by means of slots (54) over locking elements (53) of the guides (38).

9. Self-winding cable reel according to one of Claims 1 to 8, **characterized in that** clamping tension relief elements are provided within the core of the cable drum.

## Revendications

1. Enrouleur de câble. automatique, avec une plaque de base (1), qui porte un tambour de câble (3) sur un tourillon (2) et qui présente une première paroi périphérique extérieure (17) ainsi qu'une première paroi annulaire (18) orientée dans un plan radial, **caractérisé en ce qu'**un appui périphérique (39) du tambour de câble (3) pénètre dans une gorge en U de la plaque de base (1), formée par une deuxième paroi périphérique (19), une deuxième paroi annulaire (20) et une troisième paroi périphérique (21), **en ce qu'**une chambre (6) de la plaque de base (1) se raccorde à une fenêtre (26) de la deuxième paroi périphérique (19) et contient un ressort d'enroulement (8), qui est fixé à l'appui périphérique (39), **en ce que** la troisième paroi périphérique (21) présente au moins une fenêtre supplémentaire (28), à travers laquelle un galet de frein (11) passe et s'applique sur la surface intérieure de l'appui périphérique (39), **en ce qu'**une paroi annulaire centrale (22) de la plaque de base (1) comporte des bagues de contact (12, 13) et porte un tourillon (2) et **en ce qu'**une paroi annulaire (40) du tambour de câble (3) porte des contacts glissants (14, 15).

2. Enrouleur de câble automatique suivant la revendication 1, **caractérisé en ce que** le ressort d'enroulement (8) est fixé sur un tourillon central (24) de la chambre (6).

3. Enrouleur de câble automatique suivant la revendication 1 ou 2, **caractérisé en ce que** les deux contacts glissants (14, 15) sont de configuration identique et **en ce que** les têtes de contact (55) des contacts glissants sont sensiblement diamétralement opposées l'une à l'autre.

4. Enrouleur de câble automatique suivant la revendication 3, **caractérisé en ce que** les bagues de contact (12, 13) sont interchangeables et présentent des broches de contact (33), respectivement des fiches plates.

5. Enrouleur de câble automatique suivant l'une quelconque des revendications 1 à 5, **caractérisé en ce qu'**il est prévu, sur le côté de la plaque de base (1) situé à l'opposé du tourillon (2), un guidage radial (27) pour un levier de frein (9) et **en ce que** le levier de frein (9) présente des fentes (56) orientées symétriquement au guidage (27) pour le guidage d'un tourillon (58) d'un galet de frein (11).

6. Enrouleur de câble automatique suivant la revendication 5, **caractérisé en ce que** le levier de frein (9) peut être poussé en direction axiale dans le guidage (27) et dans la plaque de base (1) et **en ce qu'**il peut être verrouillé par des nervures de guidage (50) et des ergots d'arrêt (51).

7. Enrouleur de câble automatique suivant la revendication 5 ou 6, **caractérisé en ce qu'**un ressort de pression (10) agissant en direction radiale prend appui entre le levier de frein (9) et un tenon (31) de la plaque de base (1) orienté en direction radiale.

8. Enrouleur de câble automatique suivant l'une quelconque des revendications 1 à 7, **caractérisé en ce que** des poids volants (16), guidés dans des guidages radiaux (38) d'un flasque (36) du tambour de câble (3), s'accrochent par des fentes (54) à des éléments d'arrêt (53) des guidages (38).

9. Enrouleur de câble automatique suivant l'une quelconque des revendications 1 à 8, **caractérisé en ce qu'**il est prévu des éléments de détente de la traction se bloquant à l'intérieur du noyau du tambour de câble.
